(19) **Europäisches Patentamt European Patent Office Office européen des brevets**

(11) **EP 2 585 269 B1**

(12) **EUROPEAN PATENT SPECIFICATION**

(45) Date of publication and mention of the grant of the patent:
**27.09.2017 Bulletin 2017/39**

(51) Int Cl.:
*B29C 45/16* (2006.01)  *F21V 7/22* (2006.01)
*F21V 19/00* (2006.01)  *B29C 45/00* (2006.01)

(21) Application number: **11729289.6**

(86) International application number:
**PCT/EP2011/060624**

(22) Date of filing: **24.06.2011**

(87) International publication number:
**WO 2011/161241 (29.12.2011 Gazette 2011/52)**

(54) **ASSEMBLY OF POLYMERIC PARTS AND ITS MANUFACTURING METHOD**

ANORDNUNG AUS POLYMERTEILEN UND VERFAHREN ZU IHRER HERSTELLUNG

ASSEMBLAGE DE PIÈCES POLYMÈRES ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2010 EP 10167362**

(43) Date of publication of application:
**01.05.2013 Bulletin 2013/18**

(73) Proprietor: **DSM IP Assets B.V.**
**6411 TE Heerlen (NL)**

(72) Inventors:
• **DIJK, VAN, Hans, Klaas**
**NL-6133 VA Sittard (NL)**
• **KERSEMAKERS, Joseph, Johannes, Franciscus, Marie**
**NL-6136 BR Sittard (NL)**

• **DORMANS, Paulus, Hubertus, Helena**
**NL-6125 CA Obbicht (NL)**

(74) Representative: **van der Ploeg, Antonius Franciscus M.J.**
**DSM Intellectual Property**
**Urmond Office**
**P.O. Box 4**
**6100 AA Echt (NL)**

(56) References cited:
EP-A1- 0 182 228    EP-A1- 2 168 748
WO-A1-2008/006443   GB-A- 2 025 838
JP-A- 2001 300 979   JP-A- 2007 196 474
US-A- 5 833 889      US-A1- 2003 194 597
US-A1- 2004 036 417  US-A1- 2006 133 102

**Description**

The invention relates to an assembly of parts comprising a first part containing a first polymer composition and a second part containing a second polymer composition, both polymer compositions comprising a semi-crystalline polymer, the first part and the second part being fastened to each other through an interface between the first polymer composition and the second polymer composition. The invention also relates to a method of manufacturing such an assembly and to various products comprising the assembly.

Assemblies of polymeric parts comprising a first part containing a first polymer composition and a second part containing a second polymer composition fastened to each other through an interface such as recited in JP2001-300979A, JP2007-196474A, US 5'833'889A, can be made via various processes, such as by separate production of the two individual parts and co-assembly of the two parts afterwards, e.g. by mechanical fastening or gluing of the two parts; co-injection moulding of two materials from the melt using moulding machines with two injection units in parallel, thereby forming a joint by fusion of the melts of the materials (such a process is typically used in sandwich moulding); or by injection moulding of two materials using a two-shot injection moulding process using moulding machines with two injection units in series, wherein both materials are injected in a mould having the capability to reconfigure from one mould cavity configuration to another cavity configuration, whereby first a part is produced from a first material in the first mould cavity configuration, that first the part is repositioned in the second mould cavity configuration and the second part is produced by overmoulding of the first part in the second mould cavity configuration. In such latter a process generally special measures have to be taken to create a sufficiently strong bond between parts, e.g. providing the first part with protruding elements for creating a mechanically interlock between the first part and the second part and/or preheating of the first part and/or extensively heating of the melt of the second material to induce melting of the first part upon injection of the second material resulting in melt fusion bonding between the two materials. With both polymer compositions comprising a semi-crystalline polymer, accomplishment of such fusion bonding is very critical and requires more extreme processing conditions, whereas creation of mechanically interlocking has serious problems in mould construction and demoulding of the parts.

Such an assembly is known for example from US 5,114,791 wherein two-component injection moulded articles are disclosed, said articles comprising twopolymeric components joined at an interface therein between. The articles were used in reflectors for headlamps and as housings for items of technical equipment. The articles produced in US 5,114,791 are core-shell structures in which at least one part comprises a polyarylene sulfide. According to US 5,114,791 the articles show little tendency towards disruption between the components, are substantially unaffected by rapidly changing temperatures and show no sign of delamination.

It was observed by the inventors however that the interface between polymeric parts in known assemblies often has insufficient strength, in particular when the polymer compositions in both parts comprise a semi-crystalline polymer, said parts being rather easily detached from each other and adhesive failure between the parts occurs. It was also observed that for applications where high peeling forces are encountered, even for assemblies wherein the parts are not as easily detached, the interfacial or adhesive energy thereof might still be improved.

This problem is also mentioned in US2001/022303, which patent application describes multi-layer laminated hollow shaped performs for bottles. These preforms are made from semi-crystalline polyesters or semi-crystalline polyamides, amongst others. The problem in the case of such multi-layer laminated performs concerns separation of wall layers, in other words delamination. The solution to that problem provided by US2001/002230 is to provide first a single layer blank, typically a hollow shaped body, having at least one area of protrusions on its surface; being either on its inner/and or outer surface; heating said surface of the blank so as to melt or plasticize the protrusions; applying a plasticized or liquid layer of a plastic onto the surface of the blank and forming spot or zone shaped welding positions at least between the protrusions and the adjacent surface of the layer to produce a perform; and cooling the perform and solidifying the weld positions. In a particularly preferred embodiment, the protrusions possess a scaled structure. The effect of the protrusions is to mechanically interlock the different layers.

Parts with mechanically interlocking protrusions protruding from the surface of a part to be overmoulded with a second material to mechanically interlock the so produced second part require complex mould designs and moulds with different slides moving in directions other than normal in respect of the part surface. To make a hollow shaped body having at least one area of protrusions on its inner/and or outer surface also requires a very complex mould and complex demoulding process. Apart from that, the process of US2001/022303 requiring such an intermediate heating step is complicated. According to US2001/022303 the blank is made in a first mould, and applying a plasticized or liquid layer of a plastic onto the surface of the blank is done in a second mould. In between the surface of the blank can, for example, be heated by means of a gas flame, microwaves, high frequency or infrared radiation, or by means of an induction coil inserted into the blank. Such a process is not very suited for industrial scale production.

Therefore, an aim of the present invention may be to provide assemblies of polymeric parts fastened to each other, wherein the interface is free from integrally moulded mechanically interlocking elements and wherein the adhesion between the polymeric parts is at least the same as the known articles. Another aim of the present invention may also be to provide assemblies of polymeric parts fastened to each other, wherein the adhesion between the polymeric parts is improved over corresponding known articles.

The invention provides an assembly of parts comprising a first part containing a first polymer composition comprising a semi-crystalline polymer, referred to as "first polymer", and optionally one or more other components, and a second part containing a second polymer composition comprising a semi-crystalline polymer, referred to as "second polymer", and optionally one or more other components, the first part and the second part being fastened to each other through an interface between the first polymer composition and the second polymer composition, wherein the interface is free from integrally moulded mechanically interlocking elements and wherein the first polymer composition has a thermal conductivity referred to as TC1, and the second polymer composition has a thermal conductivity referred to as TC2, wherein TC2 is higher than TC1 with a factor TC2/TC1 of at least 1.5 and wherein the second polymer composition has an in-plane thermal conductivity of at least 3 W/m.K.

By polymer composition is herein understood a composition comprising a polymer and one or more further components, e.g. auxiliary additives, reinforcement fibres and/or fillers.

By integrally moulded mechanically interlocking elements are herein understood protrusions, undercuts, bores and any other elements on a moulded part having such a shape that, when integrally moulded with the part, cannot be moulded in mould with two mould halves forming the cavity and be demoulded by simply opening the two mould halves by removing of one of the halves without destruction of the part or the mechanically interlocking element, but require a mould wherein the cavity is formed by multiple mould elements and demoulding requires moving away of several mould elements.

It was observed that the strength of the interface between the first polymer composition and the second polymer composition in the assembly of the invention made by the process according to the invention, wherein the second polymer composition is injection moulded over the first part to create an interface between the first polymer composition and the second polymer composition, both polymer compositions comprising a semi-crystalline polymer, and the second polymer composition has a higher thermal conductivity by a factor of at least 1.5, is at least the same as the interfacial adhesive strength of corresponding known articles not comprising a thermal conductive composition, or only comprising compositions of comparable low thermal conductivity.

According to the invention, the first part and the second part in the assembly of parts are fastened to each other through an interface between the first polymer composition and the second polymer composition. By fastened is herein understood that said interface has enough interfacial adhesive energy to hold the parts in place without the need of further fastening means such as glue, bolts, rivets, in-moulded mechanically interlocking elements, and the like. In particular it was observed that the interfacial adhesive energy of the parts forming the assembly of parts of the invention was high enough to prevent delamination of parts even under high peeling forces.

More particular, the interfacial adhesive strength was in most cases so high that the interfacial adhesive energy could not be measured, since in peeling tests failure occurred inside one of the parts rather than separation of the parts at the interface. In other words, the assembly failed by cohesive failure of one of the parts rather than by adhesive failure at the interface, indicative for the interfacial adhesive energy being higher than either the cohesive energy of either one or even both of the polymer compositions.

Therefore in a specific embodiment of the assembly according to the invention, the first part and the second part are fastened to each other through an interface with an interfacial adhesive energy being higher than either the cohesive energy of the first polymer composition or the cohesive energy of the second polymer composition, or both.

It is noted that the interfacial adhesive energy, respectively the cohesive energy, are measured by a so-called Double Cantilever Beam (DCB) test, as described herein further below.

In those cases where cohesive failure inside one of the parts occurs, rather than adhesive failure between the parts, the interfacial adhesive is not measured as such, but is considered implicitly to be higher than the cohesive energy of the polymer composition showing the cohesive failure, which leaves open the possibility the adhesive energy might also be higher than the cohesive energy of other polymer composition.

The present invention also relates to a process for manufacturing an assembly of parts comprising a first part containing a first polymer composition comprising a semi-crystalline polymer, referred to as "first polymer", and optionally one or more other components, and a second part containing a second polymer composition comprising a semi-crystalline polymer, referred to as "second polymer", and optionally one or more other components, the first and second part being fastened to each other through an interface between the first polymer composition and the second polymer composition. The process is done by multiple-component injection moulding, preferably by two-component injection moulding, wherein the part comprising the first polymer composition is injection moulded first and the part comprising the second polymer composition is injection moulded second over the first part to create an interface between the first polymer composition and the second polymer composition and wherein the thermal conductivity of the second polymer composition (TC2) is higher than the thermal conductivity of the first polymer composition (TC1) with a factor TC2/TC1 of at least 1.5 and wherein the second polymer composition has an in-plane thermal conductivity of at least 3 W/m.K.

It was observed that the interfacial adhesive energy in an assembly of parts obtainable by the process of the invention is higher than the interfacial adhesive energies commonly encountered in corresponding know articles based on polymer compositions comprising semi-crystalline polymers not comprising a thermal conductive composition, or only comprising compositions of comparably and/or low thermal conductivity.

Two-component injection moulding devices and processes utilizing thereof are known in the art. Examples may be found in US 7,618,577; WO02057064; WO07113305; WO08043540; WO08092635 and WO1998038021. The polymer compositions used in the assembly and in the process in accordance with the invention comprise both (semi)crystalline polymers. Such (semi)crystalline polymers typically have physical properties referred to as melting temperature, crystallization temperature and glass transition temperature.

The physical properties of glass temperature (Tg), melting temperature (Tm) and crystallization temperature (Tcr) as mentioned herein are measured by DSC, applying a first heating cycle, a cooling cycle and a second heating cycle, wherein Tg is determined during the first heating cycle, Tcr is measured during the cooling cycle and Tm is determined during the second heating cycle. The heating cycles were from 0 °C to 280°C for polymers with a melting temperature below 240 °C, from 0 °C to 340°C for polymers with a melting temperature from 240 to 310 °C, and from 0 °C to 380°C for polymers with a melting temperature of 310 °C or higher.

With the term glass temperature (Tg) is herein understood the temperature, measured according to ASTM E 1356-91 by DSC with a heating rate of 10°C/minute and determined as the temperature at the peak of the first derivative (with respect of time) of the parent thermal curve of the first heating cycle corresponding with the inflection point of the parent thermal curve. With the term crystallization temperature (Tcr) is herein understood the temperature, measured according to ASTM D3418-97 by DSC with a cooling rate of 10°C/min, falling in the melting range and showing the highest crystallisation endotherm. With the term melting temperature (Tm) is herein understood the temperature, measured according to ASTM D3418-97 by DSC during the second heating cycle with a heating rate of 10°C/min, falling in the melting range and showing the highest melting rate.

The temperature used for the injection-moulding steps in the process of the invention is preferably carried out above the melting temperature (Tm) of said (semi)crystalline polymers. The injection temperature of the polymer compositions is preferably between Tm and Tm + 70°C, wherein the Tm is the melting temperature of the polymer comprised by the respective polymer composition,, more preferably said injection temperature being between Tm + 10°C and Tm + 50°C, i.e. 10-50°C above Tm, most preferably between Tm + 20°C and Tm + 40°C, i.e. 20-40°C above Tm.

In an embodiment of the process of the invention, said process comprises the steps of:

(i) injection moulding the first polymer composition, i.e. the polymer composition having the lower TC, at an injection temperature above the melting temperature (Tm1) of the first polymer to form a first part containing thereof;
(ii) cooling said first part such that the first polymer composition reaches a surface temperature (Ts1) below its crystallization temperature (Tcr1) of the first polymer; and
(iii) subsequently, injection moulding the second polymer composition, i.e. the polymer composition with the higher thermal conductivity (TC2), at a temperature above the melting temperature (Tm2) of the second polymer over the first part, to form a second part and to simultaneously form an interface between the second polymer composition and the first polymer composition.

It was observed that a higher interfacial adhesive energy was achieved for an article of the present invention obtained by to the process of this embodiment.

Preferably, the first part is allowed to cool at step (ii) of the process described hereinabove such that the first polymer composition reaches a surface temperature (Ts1) substantially below its crystallization temperature Tcr1. Good results in terms of interfacial adhesive energy were obtained when the first part is cooled at a temperature Ts1 of between Tcr1 - 60°C and Tcr1 - 200°C, i.e. 60-200°C below Tcr1, more preferably between Tcr1 - 100 and Tcr1 - 180 °C, i.e. 100-180°C below Tcr1. Such a surface temperature is obtained in a mould with the mould temperature set at Ts1 and the polymer composition being retained in the mould for a short time, of for example at least 15 seconds, or even better at least 30 seconds.

Better results in terms of interfacial adhesive energy are achieved when the second polymer has a melting temperature (Tm2) higher than the melting temperature of the first polymer (Tm1). Preferably the second polymer has a melting temperature (Tm2) of at least Tm1 + 20°C, more preferably Tm1 + 40°C and still more preferably Tm1 + 60°C.

Best results in terms of interfacial adhesive energy were obtained when the following conditions according to Formula 1 were fulfilled during the injection moulding of the second polymer composition over the first polymer composition in step (iii) of the process described hereinabove and when at least the first polymer, more preferably both the first and the second polymer were (semi)crystalline polymers:

$$\frac{Ts1 + A \times Tim2}{1 + A} \geq Tm1 \qquad \text{(Formula 1)}$$

wherein $A = (TC2/TC1)^{°0.5}$; ie. A is a number equal to the square route of the ratio TC1/TC2; *TC1* and *TC2* are the thermal conductivities of the first and of the second polymer composition, respectively; *Ts1* is the temperature of the first polymer composition at the moment of injection moulding of the second polymer composition; *Tim2* is the injection moulding temperature of the second polymer composition; and *Tm1* is the melting temperature of the first polymer composition.

In a further embodiment, the invention relates to an assembly of parts obtainable by the process of the invention, the assembly of parts comprising a first part containing a first polymer composition and a second part containing a second polymer composition, the first part and the second part being fastened to each other through an interface between the second polymer composition and the first polymer composition, wherein the thermal conductivity of the second polymer composition (TC2) is higher than the thermal conductivity of the first polymer composition (TC1) with a factor of at least TC2/TC1 = 1.5. It was observed in particular that assemblies of parts according to this embodiment might have interfacial adhesive energies never achieved hitherto.

According to the invention TC2 is higher than TC1, preferably with a factor TC2/TC1 of at least 2, more preferably of at least 3 and even better at least 4, and most preferably of at least 6.

Preferably, TC1 is at most 3 W/m.K, more preferably at most 2 W/m.K, still better 1.25 W/mK, even better at most 1 W/m.K, and most preferably at most 0.5 W/m.K. Suitably, TC1 is at least 0.1 W/m.K, more preferably at least 0.2 W/m.K, most preferably at least 0.3 W/m.K. Most preferably, TC1 is between 0.3 and 1.25 W/m.K.

Preferably, TC2 is at least 5 W/m.K and more preferably at least 10 W/m.K, and most preferably at least 20 W/m.K. TC2 may be as high as 40 W/m.K or even higher, but very good results are already obtained with TC2 in the range of 10 - 30 W/m.K.

With the term thermal conductivity (TC) of a polymer composition is herein understood the in-plane thermal conductivity in the direction of the maximum in plane conductivity. Such conductivity is also known as parallel or longitudinal thermal conductivity. The TC of a polymer composition may be measured on samples of the polymer composition, the samples having the following dimensions 80 x 80 x 2 mm and being prepared by injection moulding with an injection moulding machine equipped with a square mould with the proper dimensions and a film gate of 80 mm wide and 1 mm high positioned at one side of the square. Of the 2 mm thick injection moulded samples the thermal diffusivity in a direction in-plane and parallel ($D_{//}$) to the direction of polymer flow upon mould filling, the density (p) and the heat capacity (Cp) were determined.

The thermal diffusivity in a direction in-plane and parallel ($D_{//}$) to the direction of polymer flow upon mould filling was determined according to the ASTM method E1461-01 with Netzsch LFA 447 laserflash equipment. $D_{//}$ was determined by first cutting small strips or bars with an identical width of about 1 mm wide from the injection moulded samples. The length of the bars was in the direction of the polymer flow upon mould filling. Several of these bars were stacked with the cut surfaces facing outwards and clamped very tightly together. The thermal diffusivity was measured through the stack from one side of the stack formed by an array of cut surfaces to the other side of the stack with cut surfaces.

The heat capacity (Cp) of the samples was determined by comparison to a reference sample with a known heat capacity (Pyroceram 9606), using the same Netzsch LFA 447 laserflash equipment and employing the procedure described by W. Nunes dos Santos, P. Mummery and A. Wallwork, Polymer Testing 14 (2005), 628-634.

From $D_{//}$, the density (p) and the heat capacity (Cp), the thermal conductivity of the moulded plaques was determined according to Formula 2:

$$TC = D_{//} * \rho * Cp \qquad \text{(Formula 2)}$$

All values for any TC mentioned herein are measured at 20°C and expressed in W/m.K. It is noted that an alternative for the notation of the unity of thermal conductivity (W/m.K) is $Wm^{-1}K^{-1}$.

Preferably the assembly of the invention has an interfacial adhesive energy, i.e. the interfacial adhesive energy between the second polymer composition and the first polymer composition, of at least 100 $J/m^2$, more preferably at least 200$J/m^2$, most preferably at least 300$J/m^2$. Said interfacial adhesive energy may be increased by choosing appropriate processing conditions as detailed hereinafter or by increasing the area of the interface, herein referred to as the interfacial area, between the second and the first polymer composition.

It is noted that the interfacial adhesive energy, respectively the cohesive energy, are measured by a so-called Double Cantilever Beam (DCB) test, as described herein further below.

In those cases where cohesive failure inside one of the parts occurs, the interfacial adhesive is not measured as such, but is considered implicitly to be higher than the cohesive energy measured as a result of the said cohesive failure.

Preferably, the interfacial area is at least 10 $mm^2$, more preferably at least 100 $mm^2$, most preferably at least 1000 $mm^2$. The interfacial area may be increased by creating geometrical or other type of protrusion patterns at a surface area of the first polymer composition at the interface with the second polymer composition.

The skilled person knows how to choose the combination of polymer compositions in order to arrive at the prescribed difference in thermal conductivities between thereof.

Examples of first and second polymers suitably used in the present invention include thermoplastic semi-crystalline polymers, which can be combined with one or more further components, e.g. auxiliary additives, reinforcing fibres and/or fillers, with the proviso that such further components in combination with the first and second polymers are chosen to fulfil the thermal conductivity requirements.

Thermoplastic semi-crystalline polymers that can be used for the first and/or the second polymer include the following, in as far as these are semi-crystalline and melt-processable: polyesters, copolyetherester elastomers, copolyesterester elastomers, polyamides, copolyetheramide elastomers, polyphenylene sulphides, polyphenylene oxides, polysulfones, polyarylates, polyimides, polyetherketones, and polyetherimides, and mixtures and copolymers thereof.

In a preferred embodiment of the invention, the first and/or the second polymer is a semi-crystalline polyamide. Suitable polyamides are all the polyamides known to a person skilled in the art, comprising semi-crystalline polyamides that are melt-processable. Examples of suitable polyamides according to the invention are aliphatic polyamides, for example PA-6, PA-11, PA-12, PA-4,6, PA-4,8, PA-4,10, PA-4,12, PA-6,6, PA-6,9, PA-6,10, PA-6,12, PA-10,10, PA-12,12, PA-6/6,6-copolyamide, PA-6/12-copolyamide, PA-6/11-copolyamide, PA-6,6/11-copolyamide, PA-6,6/12-copolyamide, PA-6/6,10-copolyamide, PA-6/6,6/6,10-copolyamide, PA-4,6/6-copolyamide, PA-6/6,6/6,10-terpolyamide, and copolyamides obtained from 1,4-cyclohexanedicarboxylic acid and 2,2,4- and 2,4,4-trimethylhexamethylenediamine, aromatic polyamides, for example PA-6,I, PA-6,I/6,6-copolyamide, PA-6,T, PA-6,T/6-copolyamide, PA-6,T/6,6-copolyamide, PA-6,I/6,T-copolyamide, PA-6,6/6,T/6,I-copolyamide, PA-6,T/2-MPMDT- copolyamide (2-MPMDT = 2-methylpentamethylene diamine), PA-9,T, copolyamides obtained from terephthalic acid, 2,2,4- and 2,4,4-trimethylhexamethylenediamine, copolyamide obtained from isophthalic acid, laurinlactam and 3,5-dimethyl-4,4-diamino-dicyclohexylmethane, copolyamides obtained from isophthalic acid, azelaic acid and/or sebacic acid and 4,4-diaminodicyclohexylmethane, copolyamides obtained from caprolactam, isophthalic acid and/or terephthalic acid and 4,4-diaminodicyclohexylmethane, copolyamides obtained from caprolactam, isophthalic acid and/or terephthalic acid and isophoronediamine, copolyamides obtained from isophthalic acid and/or terephthalic acid and/or other aromatic or aliphatic dicarboxylic acids, optionally alkyl substituted hexamethylenediamine and alkyl-substituted 4,4-diaminodicyclohexylamine, and also copolyamides and mixtures of the aforementioned polyamides.

More preferably, both the first and the second polymer are a semi-crystalline polyamide.

Still more preferably, the first polymer is a semi-crystalline polyamide with a melting point of at least 200 °C, more preferably at least 220 °C. Preferably the second polymer is a semi-crystalline polyamide with a melting point of at least 240 °C, or even of at least 260 °C and most preferably of at least 280 °C.

Preferably a semi-crystalline polyamide is chosen from the group comprising PA-6, PA-6,6, PA-6,10, PA-4,6, PA-11, PA-12, PA-12,12, PA-6,I, PA-6,T, PA-6,T/6,6-copolyamide, PA-6,T/6-copolyamide, PA-6/6,6-copolyamide, PA-6,6/6,T/6,I-copolyamide, PA-6,T/2-MPMDT- copolyamide, PA-9,T, PA-4,6/6-copolyamide and mixtures and copolyamides of the aforementioned polyamides. More preferably PA-6,I, PA-6,T, PA-6,6, PA-6,6/6T, PA-6,6/6,T/6,I-copolyamide, PA-6,T/2-MPMDT-copolyamide, PA-9,T or PA-4,6, or a mixture or copolyamide thereof, is chosen as the polyamide. Still more preferably, the semi-crystalline polyamide comprises PA-4,6.

Particularly preferred examples of the first polymer suitably used in the present invention include PA6, PA66, PA46 and PA46/4T, and mixtures and copolymers thereof. More preferably the first polymer is chosen from the group consisting of PA6, PA66, and PA46, and mixtures and copolymers thereof; even better PA6 and PA66, and mixtures and copolymers thereof. It was observed that when such first polymers are used according to the invention, the assembly of parts has improved adhesion properties.

Particularly preferred examples of the second polymer suitably used in the present invention include PA6, PA66, PA46, PA-6,6/6,T, PA-9,T, PA46/4T, or mixtures or copolyamides thereof. Preferably the second polymer is chosen from the group consisting of PA6, PA66, PA46 and PA46/4T, and mixtures and copolymers thereof. More preferably the second polymer is chosen from the group consisting of PA6, PA46 and PA46/4T and mixtures and copolymers thereof. It was observed that when such second polymers are used according to the invention, the assembly of parts has improved adhesion properties.

As said above the thermally conductive polymeric composition used as the second composition has a TC2 of at least 3 W/m.K, preferably at least 5 W/m.K, and more preferably at least 10 W/m.K.

Such polymeric composition may be easily obtained by dispersing thermally conductive filler in the polymer forming said composition, said filler being in a concentration high enough to provide said polymer composition with thermal conductivity, i.e. the property of conducting heat. Suitably the thermally conductive filler has a intrinsic thermal-conductivity of at least 25 times the intrinsic thermal-conductivity of the polymer within which it is dispersed, more preferably of at least 100 times, most preferably of at least 300 times. Many thermoplastic polymers have an intrinsic thermal conductivity of about 0.3 W/m.K, or even lower.

The thermally conductive filler contained by the thermally conductive polymeric composition may be any material that can be dispersed in the polymer and that improves the thermal conductivity of the polymer. The thermally conductive filler is preferably chosen from the group consisting of aluminium, alumina, copper, magnesium, brass, carbon, silicon nitride, aluminium nitride, boron nitride, graphite, ceramic fibres and mixtures thereof. The thermally conductive filler may be in the form of granular powder, particles, whiskers, short fibres, or any other suitable form. The particles can have a variety of structures. For example, the particles can have flake, plate, rice, strand, hexagonal, or spherical-like shapes. By filler is herein understood a material consisting of particles with an aspect ratio of preferably less than 10:1. Suitably, the filler has an aspect ratio l/d of about 5:1 or less. For example, boron nitride granular particles having an aspect ratio of about 4:1 can be used). A particle may also be a fibre or a platelet, by fibre being herein understood a material consisting of particles with an aspect ratio l/d of at least 10:1. More preferably the thermally conductive fillers consist of fibres with an aspect ratio of at least 15:1, more preferably at least 25:1. Platelets are herein being understood a material consisting of particles with an aspect ratio d/t of at least 10:1. More preferably d/t is at least 25:1. In the aspect ratio l/d, l is the length, i.e. the largest dimension of the particle, whereas d is the diameter of the particle. Analogously, in the aspect ratio d/t, t is the thickness, i.e. the smallest dimension of the particle, whereas d is the largest diameter of the particle.

In a preferred embodiment, the thermally conductive filler contained by the thermally conductive polymeric composition is in the form of thermally conductive fibres. Preferably, the thermally conductive fibres comprise, metal fibres and / or carbon fibres. Suitable carbon-fibres, also known as graphite fibres, are PITCH-based carbon fibres. For example, PITCH-based carbon fibre having an aspect ratio of about 50:1 can be used. PITCH-based carbon fibres contribute significantly to the heat conductivity.

In another preferred embodiment, the thermally conductive filler contained by the thermally conductive polymeric composition is a combination of particles and fibres. Examples of such fillers are described in McCullough, U.S. patents 6,251,978 and 6,048,919, the disclosures of which are hereby incorporated by reference.

In yet another preferred embodiment of the invention, the thermally conductive filler comprises boron nitride. The advantage of boron nitride as the thermally conductive filler in a polymeric composition is that it imparts a high thermal conductivity while retaining good electrical insulating properties.

In yet another preferred embodiment of the invention, the thermally conductive filler comprises graphite, more particularly expanded graphite. The advantage of graphite as the thermally conductive filler in a polymeric composition is that it imparts a high thermal conductivity already at a very low weight percentage.

The preferred concentration of the thermally conductive filler in the thermally conductive polymeric composition is at least 5 weight percent (wt.%) per total weight of the polymer composition, more preferably at least 10 wt%, most preferably at least 15 wt%. To obtain a thermally conductive polymer composition having also good mechanical properties, the concentration of said filler within the polymer composition is preferably at most 75 wt%, more preferably at most 60 wt%, most preferably at most 45 wt%. In a preferred embodiment, boron nitride is used as thermally conductive filler in an amount in the range of 15-60 wt.%, more preferably 20-45 wt.%. In another preferred embodiment, carbon pitch fibre is used as thermally conductive filler in an amount in the range of 15-60 wt.%, more preferably 25-60 wt.%. In yet another preferred embodiment expanded graphite is used as thermally conductive filler in an amount in the range of 10-45 wt.%, more preferably 15-30 wt.%. It is noted that the wt.% mentioned herein are all relative tot the total weight of the polymer composition.

In a most preferred embodiment, the second polymer composition comprises a combination of boron nitride and graphite, more particular expanded graphite. Preferably, boron nitride and a graphite are present in a combined amount of 10-60 wt.%, each being present in an amount in the range of 5 - 30 wt.%.

In a preferred embodiment of the invention, the thermally conductive polymeric composition used for the second part consists of:

a) 30 - 90 wt.% of thermoplastic semi-crystalline polymer,
b) 10 - 70 wt.% of thermally conductive material
c) 0 - 60 wt.% of other additives

wherein the wt.% of (a), (b) and (c) is relative to the total weight of the polymer composition and the sum of (a), (b) and (c) is 100 wt.%.

In a more preferred embodiment of the invention, the thermally conductive polymeric composition consists of:

a) 30 - 90 wt.% of semi-crystalline thermoplastic polymer,
b) 10 - 70 wt.% of thermally conductive material at least 50 wt.% thereof consists of boron nitride, or graphite, or a combination thereof,
c) (i) 0 - 40 wt.% of reinforcing fibres and fillers other than component (b), and (ii) 0 -20 wt.% of other additives,

wherein the wt.% of (a), (b), (c)(i) and (c)(ii) are relative to the total weight of the polymer composition and the sum of (a), (b), (c)(i) and (c)(ii) is 100 wt.%.

In an even more preferred embodiment of the invention, the thermally conductive polymeric composition consists of:

a) 30 - 90 wt.% of a semi-crystalline polyamide with a melting point of at least 200°C,
b) 10 - 70 wt.% of thermally conductive material at least 50 wt.% thereof consist of boron nitride, or graphite, or a combination thereof,
c) (i) 0 - 40 wt.% of reinforcing fibres and fillers other than component (b), and (ii) 0 - 20 wt.% of other additives,

wherein the wt.% of (a), (b), (c)(i) and (c)(ii) are relative to the total weight of the polymer composition and the sum of (a), (b), (c)(i) and (c)(ii) is 100 wt.%.

It is noted that in these preferred embodiments the minimum amount of thermally conductive material is governed by the required minimum thermal conductivity of the polymer composition and the type of thermally conductive material, or combinations thereof, used therein.

The assembly of the invention may be utilized in various applications, e.g. gears, lamp housings, power tools, hand tools, automotive parts and the like.

The present invention further relates to a lamp component and more in particular to a lamp socket or a lamp housing comprising the assembly of the invention. Preferably, the first polymer composition contained by the lamp component of the invention is chosen from the group consisting of semi-crystalline polyamides. Preferably the second polymer composition contained by the lamp component of the invention is a thermally conductive polymeric composition as detailed hereinabove. More preferably, said thermally conductive polymeric composition contains a polymer chosen from the group consisting of polyamides and a thermally conductive filler chosen from the group consisting of graphite and/or ceramic fillers, e.g. boron nitride. Most preferably, the lamp component is manufactured in accordance with the process of the invention.

The invention will be illustrated with the help of the following examples and comparative experiments without being however limited thereto.

METHODS

Interfacial adhesive energy

The interfacial adhesive energy between two polymeric parts was measured with a Double Cantilever Beam (DCB) setup on test specimens as described further below. The tests for the interfacial adhesive energy measurements were conducted on a Zwick 1455 machine equipped with 2kN load-cells, 10kN manual grips fixtures and Zwick software TesTxpert II for control and analysis. The tests were conducted with bench displacement with a test speed of 100 mm/min, at 23°C and 50% R.H. Two identical load metal tabs are mounted exactly opposite to each other in a complete overlapping position on the upper and lower surface of the sample at one end of the cantilever beam. The tabs were glued on the sample with a commercial epoxy glue. The two polymeric parts were unfastened over a surface equal with the surface of the tabs by cutting at the interface therein between to create a split end of the beam, the detached area being under the tabs. Loads are applied to the sample through the tabs by pulling the tabs in opposite directions. By pulling on the ends of the beam, the two polymeric parts begin to delaminate. During the test, the force which is applied is measured together with the displacement of the beam ends.

The test was done 3 times for each material combination. The measured values for the delamination energy were averaged. It was separately noted whether the delamination was due to interfacial adhesive failure or cohesive failure inside of one of the parts.

PREPARATION OF TEST SPECIMEN

The investigated samples were 2-K moulded parts with a the shape of the well known double cantilever beam (DCB) consisting of two polymeric parts with equal dimensions of length (L) x width (W) x thickness (T) of 120*25*2 mm, the parts being fastened to each other over their width dimensions and along their length dimension. Such a sample is characterized by an upper surface and a lower surface, the distance between these two surfaces being perpendicular on the interface therein between and equal with double the thickness of a polymeric part. Samples were prepared by 2-component injection moulding using standard moulding conditions, involving first injection moulding a first material to form a first part followed by overmoulding of the first part with a second material constituting the second part. The injection moulding temperature of the first (Tim1) and the second material (Tim2) as well as the mould temperature, representative for the surface temperature of the first material (Ts1) at the moment of injection moulding of the second material the thermal conductivities of the first and second material and the ratio there between and the results in terms of adhesive energies are presented in Table 1.

EXAMPLES AND COMPARATIVE EXPERIMENTS

For the examples and comparative experiments different combinations of materials were used, selected from the materials listed below.

MATERIALS

| | |
|---|---|
| C-1 | Unreinforced PA46 grade, TC = 0.3 W/m.K |
| C-2 | Glass fibre reinforced grade, PA46 based, graphite filled, TC = 15 W/m.K |
| C-3 | Unfilled PA6 grade, TC = 0.3 W/m.K |
| C-4 | Unreinforced PA6 grade, graphite filled, TC = 15W/m.K |
| C-5 | Unreinforced flame retardant grade, PA46 based, boron nitride filled, TC = 1 W/m.K |
| C-6 | Unreinforced PA46 -grade, graphite filled, TC = 15 W/m.K |
| C-7 | Unreinforced grade, based on PA46/PA6 blend, TC=0.3 W/mK. |

Table 1. Overview of Examples and Comparative Experiments representing injection moulding tests comprising combinations of different materials, their thermal conductivities, moulding temperatures and resulting adhesion energy.

| Experiment | First polymer composition | Second polymer composition | TC1, TC2 Ratio TC2/TC1 | Processing Temperatures Tim1, Ts1, Tim2, | Adhesive Energy [b] (J/m$^2$) |
|---|---|---|---|---|---|
| Example I | C1 | C2 | 0.3; 15; 50 | 315;125;315; | 180 |
| Example II | C3 | C4 | 0.3; 15; 50 | 260;125;290; | 340 |
| Example III | C5 | C2 | 1; 15; 15 | 310;125;310; | 287 |
| Example IV | C5 | C4 | 1; 15; 15 | 315;135;290; | 304 |
| Example V | C1 | C6 | 0.3; 15; 50 | 315;125;315; | 170 |
| Comp. Exp A | C1 | C1 | 0.3; 0.3; 1 | 315;135;315; | ~0[a] |
| Comp. Exp B | C1 | C1 | 0.3; 0.3; 1 | 315;240;315; | ~0[a] |
| Comp. Exp C | C2 | C1 | 15; 0.3; 0.02 | 315;125;315; | ~0[a] |
| Comp. Exp D | C2 | C5 | 15; 1; 0.07 | 315;125;315; | 8 |
| Comp. Exp. E | C1 | C7 | 0.3; 0.3; 1 | 315;125;315; | ~0[a] |
| a) Too low to be measured accurately. b) In case of cohesive failure, the reported number is considered to be representative for the cohesive energy rather than the interfacial adhesive energy, the latter considered implicitly being higher than the measured value. | | | | | |

The Examples according to the invention all showed cohesive failure within one of the parts, thus evidencing that the interfacial adhesive energy was higher than the cohesive energy of at least one of the parts. The Comparative Experiments showed adhesive failure between the two parts, and a very low separation or delamination energy, thus evidencing that the interfacial adhesive energy was lower than the cohesive energy of each of the parts.

**Claims**

1. An assembly of parts comprising a first part containing a first polymer composition comprising a semi-crystalline polymer, referred to as "first polymer", and optionally one or more other components, and a second part containing a second polymer composition comprising a semi-crystalline polymer, referred to as "second polymer", and optionally one or more other components, the first part and the second part being fastened to each other through an interface between the first polymer composition and the second polymer composition, wherein the interface is free from mechanically interlocking elements and wherein the first polymer composition has a thermal conductivity referred to as TC1, and the second polymer composition has a thermal conductivity referred to as TC2, wherein TC2 is higher than TC1 with a factor TC2/TC1 of at least 1.5, **characterized in that** the second polymer composition has an in-plane thermal conductivity of at least 3 W/m.K.

2. The assembly according to claim 1, wherein the first part and the second part are fastened to each other through an interface with an interfacial adhesive energy being higher than either the cohesive energy of the first polymer composition or the cohesive energy of the second polymer composition, or both.

3. The assembly according to claim 1 or 2, wherein the ratio TC2/TC1 is at least 3.

4. The assembly according to any one of the preceding claims 1-3, wherein the first polymer composition has an in-plane thermal conductivity of at most 1.25 W/m.K.

5. The assembly according to any one of the preceding claims 1-4, wherein the first polymer and/or the second polymer comprises a semi-crystalline polyamide chosen from the group consisting of PA6, PA66, PA46 and PA46/4T, and mixtures and copolymers thereof.

6. The assembly according to any one of the preceding claims 1-5, wherein the second polymer composition comprises a thermally conductive filler chosen from the group consisting of aluminium, alumina, copper, magnesium, brass, carbon, silicon nitride, aluminium nitride, boron nitride, graphite, ceramic fibres and mixtures thereof.

7. A process for manufacturing an assembly of parts comprising a first part containing a first polymer composition comprising a semi-crystalline polymer, referred to as "first polymer", and optionally one or more other components, and a second part containing a second polymer composition comprising a semi-crystalline polymer, referred to as "second polymer", and optionally one or more other components, the first and second part being fastened to each other through an interface between the first polymer composition and the second polymer composition by multiple-component injection moulding, preferably by two-component injection moulding, wherein

- the first part containing the first polymer composition is injection moulded first and the second part containing the second polymer composition is injection moulded second over the first part to create an interface between the first polymer composition and the second polymer composition, and
- the thermal conductivity of the second polymer composition (TC2) is higher than the thermal conductivity of the first polymer composition (TC1) with a factor TC2/TC1 of at least 1.5 and wherein the second polymer composition has an in-plane thermal conductivity of at least 3 W/m.K.

8. The process according to claim 7, comprising the steps of:

(i) injection moulding the first polymer composition, i.e. the polymer composition having the lower thermal conductivity (TC1), at an injection temperature above the melting temperature (Tm1) of the first polymer to form the first part containing thereof;
(ii) cooling said first part such that the first polymer composition reaches a surface temperature (Ts1) below the crystallization temperature (Tcr1) of the first polymer; and
(iii) subsequently, injection moulding the second polymer composition, i.e. the polymer composition with the higher thermal conductivity (TC2), at a temperature above the melting temperature (Tm2) of the second polymer over the first part, to form the second part and simultaneously form an interface between the second polymer composition and the first polymer composition.

9. Process according to claim 7 or 8, wherein the first part and the second part are fastened to each other through an interface with an interfacial adhesive energy being higher than either the cohesive energy of the first polymer composition or the cohesive energy of the second polymer composition, or higher than both.

10. Process according to any one of the claims 7 or 9, wherein the first polymer and/or the second polymer comprises a semi-crystalline polyamide chosen from the group consisting of PA6, PA66, PA46 and PA46/4T, and mixtures and copolymers thereof.

11. Process according to any one of the claims 7-10, wherein the second polymer composition comprises a thermally conductive filler chosen from the group consisting of aluminium, alumina, copper, magnesium, brass, carbon, silicon nitride, aluminium nitride, boron nitride, graphite, ceramic fibres and mixtures thereof.

12. An assembly of parts obtainable by the process according to any one of claims 7-11, the assembly of parts comprising a first part containing a first polymer composition and a second part containing a second polymer composition the second part being overmoulded over the first part, the first part and the second part being fastened to each other through an interface between the first polymer composition and the second polymer composition, wherein the thermal conductivity of the second polymer composition (TC2) is higher than the thermal conductivity of the first polymer composition (TC1) with a factor TC2/TC1 of at least 1.5, **characterized in that** the second polymer composition has an in-plane thermal conductivity of at least 3 W/m.K.

13. A lamp component such as a lamp socket or lamp housing comprising an assembly according to any one of claims 1-6 or 12.

**Patentansprüche**

1. Anordnung von Teilen mit einem ersten Teil, das eine erste Polymerzusammensetzung enthält, die ein teilkristallines Polymer, das als "erstes Polymer" bezeichnet wird, und gegebenenfalls eine oder mehrere andere Komponenten umfasst, und einem zweiten Teil, das eine zweite Polymerzusammensetzung enthält, die ein teilkristallines Polymer, das als "zweites Polymer" bezeichnet wird, und gegebenenfalls eine oder mehrere andere Komponenten umfasst, wobei das erste Teil und das zweite Teil über eine Grenzfläche zwischen der ersten Polymerzusammensetzung und der zweiten Polymerzusammensetzung aneinander befestigt sind, wobei die Grenzfläche frei von mechanisch ineinandergreifenden Elementen ist und wobei die erste Polymerzusammensetzung eine Wärmeleitfähigkeit, die als TC1 bezeichnet wird, aufweist und die zweite Polymerzusammensetzung eine Wärmeleitfähigkeit, die als TC2 bezeichnet wird, aufweist, wobei TC2 höher ist als TC1 mit einem Faktor TC2/TC1 von mindestens 1,5, **dadurch gekennzeichnet, dass** die zweite Polymerzusammensetzung eine in-plane-Wärmeleitfähigkeit von mindestens 3 W/m.K aufweist.

2. Anordnung nach Anspruch 1, wobei das erste Teil und das zweite Teil über eine Grenzfläche aneinander befestigt sind, wobei eine Grenzflächenhaftungsenergie höher ist als die Kohäsionsenergie der ersten Polymerzusammensetzung und/oder die Kohäsionsenergie der zweiten Polymerzusammensetzung.

3. Anordnung nach Anspruch 1 oder 2, wobei das Verhältnis TC2/TC1 mindestens 3 beträgt.

4. Anordnung nach einem der vorhergehenden Ansprüche 1-3, wobei die erste Polymerzusammensetzung eine in-plane-Wärmeleitfähigkeit von höchstens 1,25 W/m.K aufweist.

5. Anordnung nach einem der vorhergehenden Ansprüche 1-4, wobei das erste Polymer und/oder das zweite Polymer ein teilkristallines Polyamid aus der Gruppe bestehend aus PA6, PA66, PA46 und PA46/4T und Mischungen und Copolymeren davon umfassen/umfasst.

6. Anordnung nach einem der vorhergehenden Ansprüche 1-5, wobei die zweite Polymerzusammensetzung einen wärmeleitfähigen Füllstoff aus der Gruppe bestehend aus Aluminium, Aluminiumoxid, Kupfer, Magnesium, Messing, Kohlenstoff, Siliciumnitrid, Aluminiumnitrid, Bornitrid, Graphit, Keramikfasern und Mischungen davon umfasst.

7. Verfahren zur Herstellung einer Anordnung von Teilen mit einem ersten Teil, das eine erste Polymerzusammensetzung enthält, die ein teilkristallines Polymer, das als "erstes Polymer" bezeichnet wird, und gegebenenfalls eine oder mehrere andere Komponenten umfasst, und einem zweiten Teil, das eine zweite Polymerzusammensetzung enthält, die ein teilkristallines Polymer, das als "zweites Polymer" bezeichnet wird, und gegebenenfalls eine oder mehrere andere Komponenten umfasst, wobei das erste und das zweite Teil über eine Grenzfläche zwischen der ersten Polymerzusammensetzung und der zweiten Polymerzusammensetzung durch Mehrkomponentenspritzgießen, vorzugsweise Zweikomponentenspritzgießen, aneinander befestigt werden, wobei

- das erste Teil, das die erste Polymerzusammensetzung enthält, als Erstes spritzgegossen wird und das zweite Teil, das die zweite Polymerzusammensetzung enthält, über dem ersten Teil als Zweites spritzgegossen wird, wodurch eine Grenzfläche zwischen der ersten Polymerzusammensetzung und der zweiten Polymerzusammensetzung erzeugt wird, und
- die Wärmeleitfähigkeit der zweiten Polymerzusammensetzung (TC2) höher ist als die Wärmeleitfähigkeit der ersten Polymerzusammensetzung (TC1) mit einem Faktor TC2/TC1 von mindestens 1,5 und wobei die zweite Polymerzusammensetzung eine in-plane-Wärmeleitfähigkeit von mindestens 3 W/m.K aufweist.

8. Verfahren nach Anspruch 7, das folgende Schritte umfasst:

(i) Spritzgießen der ersten Polymerzusammensetzung, d.h. der Polymerzusammensetzung mit der niedrigeren Wärmeleitfähigkeit (TC1), bei einer Spritztemperatur oberhalb der Schmelztemperatur (Tm1) des ersten Polymers zur Bildung des ersten Teils, das dieses enthält;

(ii) Abkühlen des ersten Teils, so dass die erste Polymerzusammensetzung eine Oberflächentemperatur (Ts1) unterhalb der Kristallisationstemperatur (Tcr1) des ersten Polymers erreicht; und

(iii) anschließend Spritzgießen der zweiten Polymerzusammensetzung, d.h. der Polymerzusammensetzung mit der höheren Wärmeleitfähigkeit (TC2) bei einer Temperatur oberhalb der Schmelztemperatur (Tm2) des zweiten Polymers über dem ersten Teil zur Bildung des zweiten Teils und gleichzeitigen Bildung einer Grenzfläche zwischen der zweiten Polymerzusammensetzung und der ersten Polymerzusammensetzung.

9.  Verfahren nach Anspruch 7 oder 8, bei dem das erste Teil und das zweite Teil über eine Grenzfläche aneinander befestigt werden, wobei eine Grenzflächenhaftungsenergie höher ist als die Kohäsionsenergie der ersten Polymerzusammensetzung und/oder die Kohäsionsenergie der zweiten Polymerzusammensetzung.

10. Verfahren nach einem der Ansprüche 7 oder 9, bei dem das erste Polymer und/oder das zweite Polymer ein teilkristallines Polyamid aus der Gruppe bestehend aus PA6, PA66, PA46 und PA46/4T und Mischungen und Copolymeren davon umfassen/umfasst.

11. Verfahren nach einem der Ansprüche 7-10, bei dem die zweite Polymerzusammensetzung einen wärmeleitfähigen Füllstoff aus der Gruppe bestehend aus Aluminium, Aluminiumoxid, Kupfer, Magnesium, Messing, Kohlenstoff, Siliciumnitrid, Aluminiumnitrid, Bornitrid, Graphit, Keramikfasern und Mischungen davon umfasst.

12. Anordnung von Teilen, die durch das Verfahren nach einem der Ansprüche 7-11 erhältlich ist, wobei die Anordnung von Teilen ein erstes Teil, das eine erste Polymerzusammensetzung enthält, und ein zweites Teil, das eine zweite Polymerzusammensetzung enthält, umfasst, wobei das zweite Teil über dem ersten Teil überspritzt ist, wobei das erste Teil und das zweite Teil über eine Grenzfläche zwischen der ersten Polymerzusammensetzung und der zweiten Polymerzusammensetzung aneinander befestigt sind, wobei die Wärmeleitfähigkeit der zweiten Polymerzusammensetzung (TC2) höher ist als die Wärmeleitfähigkeit der ersten Polymerzusammensetzung (TC1) mit einem Faktor TC2/TC1 von mindestens 1,5, **dadurch gekennzeichnet, dass** die zweite Polymerzusammensetzung eine in-plane-Wärmeleitfähigkeit von mindestens 3 W/m.K aufweist.

13. Lampenbauteil wie eine Lampenfassung oder ein Lampengehäuse, umfassend eine Anordnung nach einem der Ansprüche 1-6 oder 12.

## Revendications

1.  Ensemble de pièces comprenant une première pièce contenant une première composition polymère comprenant un polymère semi-cristallin, désigné sous le nom de « premier polymère », et optionnellement un ou plusieurs autres constituants, et une deuxième pièce contenant une deuxième composition polymère comprenant un polymère semi-cristallin, désigné sous le nom de « deuxième polymère », et optionnellement un ou plusieurs autres constituants, la première pièce et la deuxième pièce étant fixées l'une à l'autre par une interface entre la première composition polymère et la deuxième composition polymère, dans lequel l'interface est exempte d'éléments à verrouillage mécanique et dans lequel la première composition polymère a une conductivité thermique désignée sous le nom de TC1, et la deuxième composition polymère a une conductivité thermique désignée sous le nom de TC2, TC2 étant supérieure à TC1 selon un facteur TC2/TC1 d'au moins 1,5, **caractérisé en ce que** la deuxième composition polymère a une conductivité thermique dans le plan d'au moins 3 W/m.K.

2.  Ensemble selon la revendication 1, dans lequel la première pièce et la deuxième pièce sont fixées l'une à l'autre par une interface ayant une énergie d'adhérence interfaciale supérieure soit à l'énergie de cohésion de la première composition polymère, soit à l'énergie de cohésion de la deuxième composition polymère, soit à chacune des deux.

3.  Ensemble selon la revendication 1 ou 2, dans lequel le rapport TC2/TC1 est d'au moins 3.

4.  Ensemble selon l'une quelconque des revendications précédentes 1 à 3, dans lequel la première composition polymère a une conductivité thermique dans le plan d'au maximum 1,25 W/m.K.

5.  Ensemble selon l'une quelconque des revendications précédentes 1 à 4, dans lequel le premier polymère et/ou le deuxième polymère comprennent un polyamide semi-cristallin sélectionné dans le groupe constitué de PA6, PA66, PA46 et PA46/4T, ainsi que de mélanges et de copolymères de ceux-ci.

**6.** Ensemble selon l'une quelconque des revendications précédentes 1 à 5, dans lequel la deuxième composition polymère comprend une charge thermiquement conductrice sélectionnée dans le groupe constitué de l'aluminium, de l'alumine, du cuivre, du magnésium, du laiton, du carbone, du nitrure de silicium, du nitrure d'aluminium, du nitrure de bore, du graphite, des fibres en céramique et de mélanges de ceux-ci.

**7.** Procédé de fabrication d'un ensemble de pièces comprenant une première pièce contenant une première composition polymère comprenant un polymère semi-cristallin, désigné sous le nom de « premier polymère », et optionnellement un ou plusieurs autres constituants, et une deuxième pièce contenant une deuxième composition polymère comprenant un polymère semi-cristallin, désigné sous le nom de « deuxième polymère », et optionnellement un ou plusieurs autres constituants, la première pièce et la deuxième pièce étant fixées l'une à l'autre par une interface entre la première composition polymère et la deuxième composition polymère par un procédé de moulage par injection de plusieurs constituants, préférablement par un procédé de moulage par injection de deux constituants, dans lequel

- la première pièce contenant la première composition polymère est moulée par injection en premier, et la deuxième pièce contenant la deuxième composition polymère est moulée par injection ensuite, par-dessus la première pièce, pour créer une interface entre la première composition polymère et la deuxième composition polymère, et
- la conductivité thermique de la deuxième composition polymère (TC2) est supérieure à la conductivité thermique de la première composition polymère (TC1) selon un facteur TC2/TC1 d'au moins 1,5, et dans lequel la deuxième composition polymère a une conductivité thermique dans le plan d'au moins 3 W/m.K.

**8.** Procédé selon la revendication 7, comprenant les étapes qui consistent à :

(i) mouler par injection la première composition polymère, c.-à-d. la composition polymère ayant la conductivité thermique inférieure (TC1), à une température d'injection supérieure à la température de fusion du premier polymère (Tm1) pour former la première pièce contenant ladite première composition ;
(ii) refroidir ladite première pièce de telle sorte que la première composition polymère atteigne une température de surface (Ts1) inférieure à la température de cristallisation (Tcr1) du premier polymère ; et
(iii) ensuite, mouler par injection la deuxième composition polymère, c.-à-d. la composition polymère ayant la conductivité thermique plus élevée (TC2), à une température supérieure à la température de fusion du deuxième polymère (Tm2), par-dessus la première pièce, pour former la deuxième pièce et former simultanément une interface entre la deuxième composition polymère et la première composition polymère.

**9.** Procédé selon la revendication 7 ou 8, dans lequel la première pièce et la deuxième pièce sont fixées l'une à l'autre par une interface ayant une énergie d'adhérence interfaciale supérieure soit à l'énergie de cohésion de la première composition polymère, soit à l'énergie de cohésion de la deuxième composition polymère, soit supérieure à chacune des deux.

**10.** Procédé selon l'une quelconque des revendications 7 ou 9, dans lequel le premier polymère et/ou le deuxième polymère comprennent un polyamide semi-cristallin sélectionné dans le groupe constitué de PA6, PA66, PA46 et PA46/4T, ainsi que de mélanges et de copolymères de ceux-ci.

**11.** Procédé selon l'une quelconque des revendications 7 à 10, dans lequel la deuxième composition polymère comprend une charge thermiquement conductrice sélectionnée dans le groupe constitué de l'aluminium, de l'alumine, du cuivre, du magnésium, du laiton, du carbone, du nitrure de silicium, du nitrure d'aluminium, du nitrure de bore, du graphite, des fibres en céramique et de mélanges de ceux-ci.

**12.** Ensemble de pièces pouvant être obtenu par le procédé selon l'une quelconque des revendications 7 à 11, l'ensemble de pièces comprenant une première pièce contenant une première composition polymère et une deuxième pièce contenant une deuxième composition polymère, la deuxième pièce étant formée par moulage par-dessus la première pièce, la première pièce et la deuxième pièce étant fixées l'une à l'autre par une interface entre la première composition polymère et la deuxième composition polymère, dans lequel la conductivité thermique de la deuxième composition polymère (TC2) est supérieure à la conductivité thermique de la première composition polymère (TC1) selon un facteur TC2/TC1 d'au moins 1,5, **caractérisé en ce que** la deuxième composition polymère a une conductivité thermique dans le plan d'au moins 3 W/m.K.

**13.** Élément constitutif de lampe tel qu'une douille de lampe ou un logement de lampe comprenant un ensemble selon l'une quelconque des revendications 1 à 6 ou 12.

**EP 2 585 269 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001300979 A
- JP 2007196474 A
- US 5833889 A
- US 5114791 A
- US 2001022303 A
- US 2001002230 A
- US 7618577 B
- WO 02057064 A
- WO 07113305 A
- WO 08043540 A
- WO 08092635 A
- WO 1998038021 A
- US 6251978 B
- US 6048919 A

**Non-patent literature cited in the description**

- **W. NUNES DOS SANTOS ; P. MUMMERY ; A. WALLWORK.** *Polymer Testing,* 2005, vol. 14, 628-634